# EUROPÄISCHE PATENTSCHRIFT

(11) **EP 2 437 905 B1**
(45) Veröffentlichungstag und Bekanntmachung des Hinweises auf die Patenterteilung: **02.07.2014**
(21) Anmeldenummer: 10724437.8
(22) Anmeldetag: 01.06.2010
(51) Int. Cl.: C08J 9/232, B22F 3/11, C08J 9/00

(54) **VERFAHREN ZUR HERSTELLUNG VON PORÖSEN METALL-SINTERFORMKÖRPERN**
METHOD FOR PRODUCING POROUS METALLIC SINTERED BODIES
PROCÉDÉ DE FABRICATION DE CORPS MÉTALLIQUES FRITTÉS POREUX

(30) Priorität: 02.06.2009 EP 09161664
(43) Veröffentlichungstag der Anmeldung: 11.04.2012
(73) Patentinhaber: BASF SE, 67056 Ludwigshafen (DE)
(72) Erfinder: KETAN, Joshi, 68259 Mannheim (DE); BELLIN, Ingo, 68159 Mannheim (DE); SANDLER, Jan Kurt Walter, 67374 Hanhofen (DE); WAGNER, Norbert, 67112 Mutterstadt (DE); HAHN, Klaus, 67281 Kirchheim (DE); KIEBURG, Christoffer, 67133 Maxdorf (DE); COURTOIS, Julien, 67063 Ludwigshafen (DE); TRAUT, Alexander, 69198 Schriesheim (DE)
(86) Internationale Anmeldenummer: PCT/EP2010/057618
(87) Internationale Veröffentlichungsnummer: WO 2010/139686

(56) Entgegenhaltungen:
- EP-A2- 0 799 810
- WO-A1-2004/067476

## Beschreibung

Die Erfindung betrifft ein Verfahren zur Herstellung von porösen Metall-Sinterformkörpern.

Metallische Schäume weisen einige interessante Eigenschaften auf: Ihre Dichte ist gegenüber dem massiven Metall stark reduziert. Dennoch weisen sie eine hohe spezifische Steifigkeit und Festigkeit auf. Die zellulare Struktur wandelt bei einem Aufprall sehr viel kinetische Energie in Verformungsenergie und Wärme um, so dass sich Metallschäume gut zum Einbau in Crashelemente eignen. Gegenüber Polymerschäumen besitzen Metallschäume eine deutlich höhere Festigkeit und Temperaturbeständigkeit. Weitere potentielle Anwendungen betreffen Hitzeschilde, Filter, Katalysatorträger, schallabsorbierende Verkleidungen oder die Herstellung sehr leichter, ausgeschäumter Walzen für die Druck- oder Papierindustrie.

Metallschäume können auf verschiedene Weisen hergestellt werden. Bei der "Pulverroute" werden ein Metallpulver und ein pulverförmiges Treibmittel, z. B. Titanhydridpulver (TiH₃) vermischt, durch Axialpressen oder Extrudieren zu einem schäumbaren Halbzeug verarbeitet und auf die Schmelztemperatur des Metalls erhitzt. Das Treibmittel setzt Gase frei und schäumt das schmelzflüssige Metall auf. Je nach Haltezeit der Temperatur verändert sich die Schaumstruktur, wie die relative Dichte, Porengröße und dergleichen. Bei der "Schmelzroute" wird Gas in eine Metallschmelze eingeblasen und das aufgeschäumte Metall erstarrt. Um die Blasen in der Schmelze zu stabilisieren, kann die Schmelze z. B. SiC-Partikel enthalten.

Metallische Formkörper können durch Spritzgießen von thermoplastischen Massen hergestellt werden, die neben Metallpulvern ein Polymer als organisches Bindemittel aufweisen. Es handelt sich um hochgefüllte organische Polymerformmassen. Nach dem Spritzgießen, Extrudieren oder Verpressen der thermoplastischen Masse zu einem Grünkörper wird das organische Bindemittel entfernt, und der erhaltene entbinderte Grünkörper wird gesintert. Durch Mitverwendung von Treibmitteln können auch poröse metallische Formkörper erhalten werden.

So offenbart die WO 2004/067476 ein Verfahren zur Herstellung eines zellularen Sinterformkörpers, bei dem man Metallpulver mit Binderkomponenten mischt und als Treibmittel blähfähige Polystyrol-Teilchen (EPS) einarbeitet. Diese thermoplastisch fließfähige Formmasse wird in eine Gehäuseform zur Expansion der Formmasse eingebracht, in einen schmelzflüssigen Zustand überführt und aufgeschäumt. Die geschäumte Formmasse wird verfestigt, die organischen Komponenten werden entfernt und der derart behandelte Formkörper gesintert. Der Schritt des Aufschäumens soll unter Bildung einzelner, in der Formmasse eine jeweils geschlossene Raumform einnehmender expandierter Polystyrol-Schaumteilchen mit enger Durchmesserverteilung erfolgen. Bei diesem Verfahren sind Binder und schäumbares Material zwingend voneinander verschieden. Die Herstellung der Formmasse ist aufwendig und erfordert zahlreiche sukzessive Schritte.

Gemäß der WO 2004/067476 werden einfach dimensionierte Formkörper durch Pressen einer pulverförmigen EPS-haltigen Formmasse zu Presslingen und nachträgliches Aufschäumen mit Dampf in einer perforierten Form erhalten. Geometrisch komplexe Formteile sollen durch Formgebung und Aufschäumen der Formmasse mittels bekannter Spritzgießverfahren erhältlich sein. Das Verfahren hat den Nachteil, dass die durch die EPS-Partikel vorgegebenen Poren sehr groß sind, wodurch im Formkörper nur wenige stabilisierende Stege verbleiben, die zudem inhomogen verteilt sind. Letztlich werden Materialien erhalten, deren mechanischen Eigenschaften für viele Anwendungen unzureichend sind.

Die DE 103 28 047 B3 beschreibt ein Verfahren zur Herstellung eines Bauteils aus Metallschaum, bei dem mehrere Metallschaumbausteine dreidimensional angeordnet werden, die mittels Energiezufuhr durch zumindest teilweises Aufschäumen von Granulatteilchen erhältlich sind, die ein Metallpulver und ein Treibmittelpulver, z. B. ein Metallhydrid, enthalten. Die so angeordneten Metallschaumbausteine werden einer Nachbehandlung unterworfen, so dass jeweils benachbarte Metallschaumbausteine formschlüssig, stoffschlüssig und/oder adhäsiv miteinander verbunden sind. Nachteilig ist bei diesem Verfahren, dass es bei der Herstellung der Metallschaumbausteine zu einem partiellen Zusammenfallen des gebildeten Metallschaumes und damit zu einer unkontrollierbaren Ausbildung dichter Zonen im Inneren eines so erstellten Bausteins und einer geringen Abbildungstreue kommen kann. Ohne Verklebung haften die einzelnen Metallschaumbausteine nicht aneinander.

EP0799810 A2 beschreibt ein Verfahren zur Herstellung von offenzelligen Sinterschäumen, wobei ein Schlickermaterial aus sinterfähigem anorganischen Pulver, einem dieses Schlickermaterial fliessfähig machenden fluiden, verdampfbaren Material und gegebenenfalls einem Treibgas bildenden Material in einer Schäumstufe unter Freisetzung des Treibgases in ein geschäumtes Produkt umgewandelt wird.

Der Erfindung liegt die Aufgabe zugrunde, ein Verfahren zur Herstellung von porösen Metall-Sinterformkörpern anzugeben, das von den vorstehenden Nachteilen frei ist.

Die Aufgabe wird gelöst durch ein Verfahren zur Herstellung von porösen Metall-Sinterformkörpern, bei dem man expandierbare Polymerteilchen, in denen ein sinterbares Metallpulver dispergiert ist, zu einem Formkörper schäumt und den grünen Formkörper einer Wärmebehandlung unterzieht, bei der das Polymer ausgetrieben wird und das sinterbare Metallpulver zu einem porösen Metall-Sinterformkörper sintert.

In einer zweckmäßigen Ausführungsform bringt man die expandierbaren Polymerteilchen in eine Form ein, die nach der Befüllung bevorzugt allseitig abgeschlossen wird, und schäumt die expandierbaren Polymerteilchen, beispielsweise durch Behandlung mit Wasserdampf und/oder heißer Luft. Die Geometrie (Raumform) der Form entspricht üblicherweise der gewünschten Geometrie des späteren Förmteils.

In den meisten Fällen ist es bevorzugt, die expandierbaren Polymerteilchen vor dem Einbringen in die Form vorzuschäumen. Beim Vorschäumen werden die expandierbaren Polymerteilchen unter mechanischer Bewegung erwärmt, z. B. durch Aufwirbeln mit einem heißen Gas, insbesondere Luft und/oder Wasserdampf. Hierzu geeignete so genannte Vorschäumer sind dem Fachmann aus der Herstellung von EPS-Dämmstoffen bekannt. Temperaturen von z. B. 60 bis 120 °C sind im Allgemeinen geeignet. Dabei blähen sich die Teilchen infolge des verdampfenden Treibmittels und teilweise auch infolge des eingedrungenen Wasserdampfes auf, wobei sich im Perleninnern eine geschlossenzellige Struktur bildet. Beim Vorschäumen verschweißen die Polymerteilchen nicht miteinander und bleiben als diskrete Teilchen erhalten.

Durch den Aufschäumgrad, der hauptsächlich von der Zeitdauer der Wärmeeinwirkung abhängt, kann die Dichte der späteren Formkörper beeinflusst werden. Die Zeitdauer der Wärmeeinwirkung beim Vorschäumen beträgt typischerweise 5 bis 100 Sekunden.

Ohne den Schritt des Vorschäumens kann es beim Schäumen der expandierbaren Polymerteilchen in der Form zu einer ungleichmäßigen Expansion und Formerfüllung kommen, wobei die expandierbaren Polymerteilchen in der Nähe der beheizten Wände der Form stärker expandieren als Teilchen im Inneren der Form.

In der Regel füllt man die Form nur teilweise mit den (gegebenenfalls vorgeschäumten) expandierbaren Polymerteilchen aus. Beim Schäumen expandieren die Polymerteilchen und schäumen die anfangs unvollständig gefüllte Form formschlüssig aus. Dabei verschweißen die Polymerteilchen miteinander.

Insbesondere bei komplizierteren Geometrien kann es aber auch vorteilhaft sein, das Leervolumen in der Form gering zu halten und die Schüttung der in die Form eingefüllten (gegebenenfalls vorgeschäumten) expandierbaren Polymerteilchen gegebenenfalls zu verdichten und auf diese Weise unerwünschte Hohlräume zu beseitigen. Das Verdichten kann z.B. durch Rütteln der Form, Taumelbewegungen oder andere geeignete Maßnahmen erfolgen.

Das Schäumen erfolgt üblicherweise durch Erwärmen auf beispielsweise 60 bis 120 °C, bevorzugt 70 bis 110 °C, z. B. indem man die gefüllte Form mit Wasserdampf, Heißluft, siedendem Wasser oder einem anderen Wärmeüberträger erwärmt. Durch das Schäumen wird eine Volumenvergrößerung des Polymeranteils der Teilchen erreicht, wobei die Zwischenräume in der Schüttung durch die expandierenden Polymerteilchen ausgefüllt werden und infolge von Kraftwechselwirkungen der sich in ihren Volumina vergrößernden Teilchen eine formgebende Gestaltung der einzelnen Teilchen erfolgt. Die Polymerteilchen verschmelzen an den gegenseitigen Berührungsflächen, so dass die Polymerteilchen zu einem Formkörper (Grünkörper) verschweißen. Dabei gibt das Formwerkzeug die Form und das Volumen des Grünkörpers vor. Der eine ausreichende Grünfestigkeit aufweisende Formkörper kann der Form entnommen werden.

Der Druck beim Schäumen ist üblicherweise nicht kritisch und beträgt in der Regel 0,05 bis 2 bar. Die Dauer des Ausschäumens hängt unter anderem von Größe und Geometrie sowie der gewünschten Dichte des Formteils ab und kann in weiten Grenzen variieren.

Das erfindungsgemäße Verfahren geht von expandierbaren Polymerteilchen aus, in denen ein sinterbares Metallpulver dispergiert ist. Die expandierbaren Polymerteilchen sind vorzugsweise frei fließend oder leicht fließend. Der Gewichtsanteil des dispergierten sinterbaren Metallpulvers, bezogen auf das Gesamtgewicht von Polymer und sinterbarem Metallpulver, beträgt vorzugsweise 60 bis 95 Gew.-%, insbesondere 65 bis 90 Gew.-%. In den Polymerteilchen bildet das Polymer eine kontinuierliche (zusammenhängende) Phase, in der das sinterbare Metallpulver dispergiert ist.

Die expandierbaren Polymerteilchen enthalten vorzugsweise ein physikalisches Treibmittel, wie aliphatische Kohlenwasserstoffe mit 2 bis 7 Kohlenstoffatomen, Alkohole, Ketone, Ether, halogenierte Kohlenwasserstoffe, Kohlendioxid oder Wasser, oder Gemische davon. Bevorzugt sind iso-Butan, n-Butan, iso-Pentan oder n-Pentan bzw. Gemische davon. Die expandierbaren Polymerteilchen enthalten in der Regel 2 bis 20 Gew.-% bevorzugt 3 bis 15 Gew.-% Treibmittel, bezogen auf den Polymeranteil der expandierbaren Polymerteilchen. Das Treibmittel liegt in den expandierbaren Polymerteilchen molekular gelöst im Polymer und/oder als eingeschlossene Tröpfchen vor.

Vorzugsweise sind die expandierbaren Polymerteilchen kugelförmig, wobei jedoch auch eine andere Gestalt, wie z. B. stäbchenförmige oder linsenförmige Granulate, in Betracht kommt. Die expandierbaren Polymerteilchen weisen im Allgemeinen einen Durchmesser (bzw. eine Länge in Richtung der größten Raumausdehnung bei nicht-kugelförmigen Teilchen) von 0,5 bis 30 mm, insbesondere 0,7 bis 10 mm auf.

Die expandierbaren Polymerteilchen sind auf verschiedene Art und Weise erhältlich.

Die expandierbaren Polymerteilchen sind beispielsweise dadurch erhältlich, dass man ein expandierbares thermoplastisches Polymergranulat durch Einmischen eines Treibmittels und eines sinterbaren Metallpulvers in eine Polymerschmelze und Granulieren der Schmelze herstellt. Vorzugsweise werden die expandierbaren Polymerteilchen mittels eines Extrusionsverfahren hergestellt. Hierbei wird das Treibmittel über einen Extruder in eine Polymerschmelze eingemischt, das sinterbare Metallpulver eingemischt und die Polymerschmelze durch eine Düsenplatte gefördert und zu Partikeln granuliert. Meist wird die Schmelze nach dem Einmischen des Treibmittels gekühlt. Jede dieser Stufen kann durch die in der Kunststoffverarbeitung bekannten Apparate oder Apparatekombinationen ausgeführt werden. Die Polymerschmelze kann direkt aus einem Polymerisationsreaktor entnommen werden oder in dem Mischextruder oder einem separaten Aufschmelzextruder durch Aufschmelzen von Polymergranulaten erzeugt werden. Zur Einmischung eignen sich statische oder dynamische Mischer. Die Kühlung der Schmelze kann in den Mischaggregaten oder in separaten Kühlern erfolgen. Für die Granulierung kommen beispielsweise die druckbeaufschlagte Unterwassergranulierung, Granulierung mit rotierenden Messern und Kühlung durch Sprühvernebelung von Temperierflüssigkeiten oder Zerstäubungsgranulation in Betracht.

Das Einmischen des sinterbaren Metallpulvers erfolgt geeigneterweise über einen Seitenextruder. Man kann z. B. vom zunächst erhaltenen Schmelzestrang vor dem Durchtritt durch die Düsenplatte einen Teilstrom über ein Schmelzeventil in einen Seitenstrang führen. Dort wird das Metallpulver zudosiert und homogen in den Schmelzestrom eingemischt. Abschließend werden der Hauptstrom und der additivhaltige Seitenstrom gemischt und über die Düsenplatte ausgetragen. Um das Metallpulver mit einer ausreichenden Genauigkeit in den Schmelzestrom eindosieren zu können, kann dieses vorher verpastet werden. Das bedeutet, dass es in eine mit der Schmelze und dem Metallpulver kompatible Flüssigkeit eingearbeitet wird, so dass eine Paste mit bevorzugt hoher Viskosität entsteht.

Ein geeignetes Verfahren ist beispielsweise in der DE 10 358 786 A1 beschrieben, auf die vollinhaltlich verwiesen wird.

Wenn bei der Herstellung der expandierbaren Polymerteilchen Temperaturen erreicht werden, die über dem Flammpunkt des Metallpulvers liegen, werden die Apparaturen vorzugsweise mit einem geeigneten Schutzgas, wie Stickstoff oder Argon, überströmt.

Alternativ kann man zunächst ein Granulat durch Einmischen eines sinterbaren Metallpulvers in eine Polymerschmelze und Granulieren der Schmelze herstellen. Dieses Granulat kann dann in wässriger Suspension in beheizten und gerührten Druckkesseln bei Temperaturen in der Nähe des Erweichungspunktes zu Perlen umgeformt und gleichzeitig mit Treibmittel imprägniert werden. Durch dieses Umperlen erhält man perlförmige Teilchen definierter Teilchengröße. Das Umperlen erfolgt im Allgemeinen bei 120 bis 160 °C, z. B. etwa 140 °C, über eine Zeitspanne von 1 bis 24 Stunden, z. B. 12 bis 16 Stunden. Geeignete Verfahren sind z. B. in den DE-A 25 34 833, DE-A 26 21 448, EP-A 53 333 und EP-B 95 109 beschrieben, auf die vollinhaltlich verwiesen wird. Alternativ kann man das Granulat bei einer Temperatur unterhalb der Erweichungstemperatur des Polymers unter Druck mit Treibmittel imprägnieren. Hierzu ist ein Druck von 25 bis 70 bar (absolut), z. B. etwa 50 bar geeignet. Die Temperatur kann z. B. 25 bis 60 °C, z. B. etwa 40 °C, betragen. Eine Zeitspanne von 0,5 bis 20 Stunden, z. B. etwa 8 Stunden, ist im Allgemeinen geeignet. Hierzu wird eine druckfeste Apparatur, z. B. ein Autoklav, mit dem Granulat befüllt, das Treibmittel in einer Menge zugegeben, dass es das Granulat vorzugsweise vollständig bedeckt, und die Apparatur verschlossen. Luft wird durch ein Inertgas, wie Stickstoff, verdrängt. Dann wird die Apparatur aufgeheizt und der gewünschte Druck eingestellt. Der Druck stellt sich als Eigendruck des Treibmittels bei der Behandlungstemperatur ein oder wird durch Aufpressen von Inertgas eingestellt.

Als sinterbare Metallpulver seien beispielsweise Aluminium, Eisen, insbesondere Eisencarbonylpulver, Kobalt, Kupfer, Nickel, Silicium, Titan und Wolfram genannt, wovon Aluminium, Eisen, Kupfer, Nickel und Titan bevorzugt sind. Als pulverförmige Metalllegierungen sind beispielsweise hoch oder niederlegierte Stähle sowie Metalllegierungen auf der Basis von Aluminium, Eisen, Titan, Kupfer, Nickel, Kobalt oder Wolfram zu nennen. Dabei können sowohl Pulver von bereits fertigen Legierungen als auch die Pulvermischungen der einzelnen Legierungsbestandteile eingesetzt werden. Die Metallpulver, Metalllegierungspulver und Metallcarbonylpulver können auch im Gemisch eingesetzt werden. Beim Einsatz gemischter Metallpulver sollten die Schmelzpunkte der Gemischkomponenten nicht zu stark voneinander differieren, da sonst die niedriger schmelzende Komponente bereits fließt und die höher schmelzende Komponente zurückbleibt. Vorzugsweise beträgt die maximale Schmelzpunktsdifferenz 800 °C oder weniger, insbesondere 500 °C oder weniger und am meisten bevorzugt 300 °C oder weniger.

Geeignete Metallpulver sind z. B. atomisierte (verdüste) Metallpulver, die mittels Versprühen von flüssigem Metall mit komprimierten Gasen erhalten sind.

Als Metallpulver ist Carbonyleisenpulver bevorzugt. Carbonyleisenpulver ist ein Eisenpulver, das durch thermische Zersetzung von Eisencarbonylverbindungen hergestellt wird. Zum Erhalt der Fließfähigkeit und zur Verhinderung von Agglomeration kann es z.B. mit SiO₂ beschichtet sein. Als Korrosionsinhibitor kann vorzugsweise Eisenphosphidpulver mitverwendet werden. Carbonyleisenpulver weist eine kleine und einheitliche Partikelgröße auf; die Partikel weisen im wesentlichen sphärische Gestalt auf. Daher ist die Schmelzviskosität der Komposite mit Polymeren sehr niedrig und der Schmelzpunkt einheitlich. Geeignete Carbonyleisenpulver gehen z. B. aus der DE 10 2005 062 028 hervor.

Weitere bevorzugte Metallpulver sind solche aus Aluminium und Kupfer.

Die Korngrößen der Pulver betragen vorzugsweise 0,1 bis 80 µm, besonders bevorzugt 1,0 bis 50 µm.

Als Polymer eignen sich thermoplastische Polymere mit gutem Aufnahmevermögen für Treibmittel, wie beispielsweise Styrolpolymere, Polyamide (PA), Polyolefine, wie Polypropylen (PP), Polyethylen (PE) oder Polyethylen-Propylencopolymere, Polyacrylate, wie Polymethylmethacrylat (PMMA), Polycarbonat (PC), Polyester, wie Polyethylentherephtalat (PET) oder Polybutylenterephthalat (PBT), Polyethersulfone (PES), Polyetherketone oder Polyethersulfide (PES) oder Mischungen davon. Besonders bevorzugt werden Styrolpolymere eingesetzt.

Bevorzugt werden als Styrolpolymere glasklares Polystyrol (GPPS), Schlagzähpolystyrol (HIPS), anionisch polymerisiertes Polystyrol oder Schlagzähpolystyrol (A-IPS), Styrol-α-Methstyrol-copolymere, Acrylnitril-Butadien-Styrolpolymerisate (ABS), Styrol-Acrylnitril (SAN) Acrylnitril-Styrol-Acrylester (ASA), Methyacrylat-Butadien-Styrol (MBS), Methylmethacrylat-Acrylnitril-Butadien-Styrol (MABS)- polymerisate oder Mischungen davon oder mit Polyphenylenether (PPE) eingesetzt.

Zur besseren Dispergierung der Partikel in der Polymerschmelze können gegebenenfalls Dispiergierhilfsmittel zugesetzt werden. Beispiele sind oligomeres Polyethylenoxid mit einem mittleren Molekulargewicht von 200 bis 600, Stearinsäure, Stearinsäureamid, Hydroxystearinsäure, Magnesium-, Calcium- oder Zinkstearat, Fettalkohole, ethoxylierte Fettalkohole, Fettalkoholsulfonate, ethoxylierte Glyceride und Blockcopolymere von Ethylen- und Propylenoxid, sowie Polyisobutylen.

Durch eine Wärmebehandlung wird das Polymer ausgetrieben. Das sinterbare Metallpulver wird zu einem porösen Sinterformkörper gesintert. Der Begriff "austreiben" soll vorgelagerte Zersetzungs- und/oder Pyrolysevorgänge umfassen. Die Wärmebehandlung kann in einem ein- oder mehrstufigen Verfahren erfolgen. Bevorzugt wird in einer ersten Stufe bei einer ersten Temperatur das Polymer ausgetrieben (Entbinderung) und der so erhalten entbinderte Formkörper bei einer zweiten Temperatur gesintert. Die zweite Temperatur liegt in der Regel um wenigstens 100 °C höher als die erste Temperatur. Wird der Formkörper direkt der Sintertemperatur ausgesetzt, wird vielfach eine starke Russbildung auf dem Metallformkörper beobachtet, die vermutlich auf eine zu schnelle Pyrolyse zurückzuführen ist.

Entbinderung und Sinterprozess können in der gleichen Apparatur vorgenommen werden; es können aber auch verschiedene Apparaturen zum Einsatz kommen. Geeignete Öfen zur Durchführung der Entbinderung und/oder des Sinterns sind Kammerumluftöfen, Schachtretortenöfen, Herdwagen-Umlauföfen, Haubenöfen, Elevatoröfen, Muffelöfen und Rohröfen. Bandöfen, Kombikammeröfen oder Herdwagenöfen sind geeignet, die Schritte von Entbinderung und Sintern in der gleichen Apparatur durchzuführen.

Die Öfen können mit Vorrichtungen zum Einstellen einer definierten Entbinderungs- und/oder Sinteratmosphäre versehen sein.

Zur Durchführung der Entbinderung ist es bevorzugt, den Formkörper schockartig der Entbinderungstemperatur auszusetzen und nicht langsam auf die Entbinderungstemperatur aufzuheizen, da sonst das Polymer zerlaufen kann und die Schaumstruktur verloren geht. Es ist also in der Regel nicht sinnvoll, den Formkörper während der Aufheizphase in der Heizzone des Ofens zu belassen. Zur Durchführung der Entbinderung im Labor eignet sich beispielsweise ein Rohrofen mit langem Innenrohr, bei dem die Probe während der Aufheizphase im Rohr, aber außerhalb der Heizzone angeordnet ist. Sobald die Zieltemperatur erreicht ist, kann die Probe in die Heizzone geschoben werden. Zur großtechnischen Durchführung der Entbinderung eignen sich beispielsweise besonders Bandöfen.

Die Entbinderung erfolgt vorzugsweise in einer definierten Atmosphäre. In der Regel ist eine inerte Atmosphäre oder reduzierende Atmosphäre bevorzugt, wobei eine reduzierende Atmosphäre besonders bevorzugt ist. Bei Metallen, wie Aluminium, Zink oder Kupfer, kann es zur Erhöhung der sogenannten Grünfestigkeit zweckmäßig sein, unter leicht oxidierenden Bedingungen zu entbindern. Hierdurch werden eine bessere Entfernung von Restkohlenstoff und eine festigkeitssteigernde Oxidhaut an den Oberflächen der Metallpulverteilchen erreicht.

Für die Entbinderung ist eine Temperatur von 150 bis 800 °C im Allgemeinen geeignet. Bei Eisen hat sich eine Temperatur von etwa 700 °C bewährt, bei Aluminium eine Temperatur von 400 bis 600 °C. Die Dauer hängt stark von der Größe des Formkörpers ab.

An die Entbinderung schließt sich ein Sinterprozess an. Dieser Sinterprozess kann bei einer Temperatur von 250 bis 1500 °C vorgenommen werden. Bei Eisen hat sich eine Sintertemperatur von 900 bis 1100 °C bewährt, bei Aluminium eine Temperatur von maximal 650 °C. Die Sinteratmosphäre kann auf das verwendete Metall abgestimmt werden. In der Regel ist eine inerte Atmosphäre oder reduzierende Atmosphäre bevorzugt, wobei eine reduzierende Atmosphäre besonders bevorzugt ist.

Als reduzierende Atmosphäre bei der Entbinderung und/oder Sintern haben sich Wasserstoff oder Gemische aus Wasserstoff und Inertgas, z. B. ein Wasserstoff/Stickstoffgemisch, bewährt. Das Gemisch aus Wasserstoff und Inertgas enthält vorzugsweise wenigstens 3 Vol.-% Wasserstoff.

Bei der Pyrolyse kann der Formkörper unter Umständen "nachschäumen". Es kann zweckmäßig sein, die Pyrolyse in einer Form mit perforierten Wänden durchzuführen, wobei stärkere Formfüllung sowie Verdichtung und Verklebung stattfindet.

Gemäß der Erfindung werden hochfeste poröse metallische Leichtkörper erzielt.

Die Erfindung wird anhand der nachfolgenden Beispiele näher erläutert.

### Beispiel 1:

### a) Extrudieren von Polystyrol mit Carbonyleisenpulver:

Man kompoundierte 4,0 kg Polystyrol (erhältlich unter der Bezeichnung 158K von der BASF SE, Ludwigshafen, Deutschland) mit 16kg Carbonyleisenpulver (Carbonyleisenpulver EQ, erhältlich von BASF SE) in einem Extruder und granulierte die Schmelze mittels Heißabschlag zu Granulat einer mittleren Teilchengröße von etwa 3 mm.

### b) Druckimprägnieren mit Pentan:

Das Granulat wurde dann in Pentan S (80% n-Pentan, 20% iso-Pentan) getaucht und 4 Stunden in einem Druckautoklaven bei einem Druck von 50 bar und einer Temperatur von 40 °C gehalten. Man erhielt Polymerteilchen, die mit etwa 5 Gew.-% Pentan beladen waren.

### c) Herstellen des Grünkörpers:

Man brachte das Granulat in eine geschlossene würfelförmige Stahlform mit 4 cm Kantenlänge ein und heizte die Form 10 Minuten mittels Wasserdampf auf etwa 100 °C. Die Polymerteilchen dehnten sich bei dieser Behandlung aus und verschmolzen zu einem Grünkörper, der aus der Form genommen wurde.

### d) Entbinderung und Sintern:

Der Grünkörper wurde mit Hilfe einer Säge in kleinere Würfel gesägt und anschließend in einem Porzellanschiffchen in ein Quarzglasrohr gesetzt. Das Quarzglasrohr wurde waagrecht in einen aufklappbaren Hochtemperatur-Rohrofen (Modell LOBA 11-50 der Firma HTM Reetz, Berlin, Deutschland) eingesetzt. Das Quarzglasrohr ragte beidseitig aus dem Ofen heraus. Das Porzellanschiffchen wurde zunächst an einem äußeren Ende des Quarzglasrohrs angeordnet, d. h. außerhalb der Heizzone. Das Quarzglasrohr wurde mit Stickstoff durchströmt.

Der Ofen wurde auf 700 °C eingestellt. Sobald der Ofen eine Temperatur von 700 °C erreichte, wurde die Stickstoffdurchströmung um 50% von 20L/h auf 10L/h reduziert und die Wasserstoffdurchströmung mit 10L/h zugeschaltet. Anschließend wurde das Porzellanschiffchen im Quarzglasrohr in die Ofenmitte geschoben. Nachdem die Probe eine Temperatur von 700 °C erreichte, wurde sie 10 min in der Heizzone belassen. Dann wurde sie wieder aus der Heizzone an das Ende des Quarzglasrohrs gezogen.

Der Ofen wurde nun auf 900 °C eingestellt. Sobald die Solltemperatur erreicht war, wurde das Porzellanschiffchen wieder in die Ofenmitte geschoben. Nach Erreichen einer Sintertemperatur von 900 °C beließ man die Probe 15 min in der Heizzone. Danach wurde das Porzellanschiffchen wieder aus der Heizzone gezogen und der Ofen abgeschaltet. Nach dem Erkalten wurde die Probe entnommen.

### e) Untersuchung der mechanischen Eigenschaften:

Die Untersuchung der mechanischen Eigenschaften erfolgte in Anlehnung an die Prüfnorm DIN EN 826 - Druckfestigkeit von Dämmstoffen. Hierbei können die Druckspannung bei 10-100% Stauchung und auch das E-Modul ermittelt werden. Untersucht wurden Proben der gleichen Zusammensetzung, die alle bei 700 °C 10 min entbindert aber bei unterschiedlichen Temperaturen (900 °C und 1000 °C) und mit verschiedenen Verweilzeiten gesintert wurden.

Es wurden folgende Ergebnisse erhalten:

| Versuch | Entbinderung | Sinterung | Dichte | Max. Spannung | Druckspannung bei 10% Stauchung | E-Modul |
|---|---|---|---|---|---|---|
| | [°C/min] | [°C/min] | (g/cm³) | (kPa) | (kPa) | (kPa) |
| 1 | 700/10 | 900/5 | 1,27 | 4187 | 2527 | 370285 |
| 2 | 700/10 | 900/10 | 1,43 | 6180 | 3397 | 452462 |
| 3 | 700/10 | 900/15 | 1,64 | 10654 | 6799 | 668253 |
| 4 | 700/10 | 900/30 | 1,59 | 11.746 | 9.033 | 1.211.838 |
| 5 | 700/10 | 900/60 | 2,29 | 14.794 | 12.247 | 2.633.667 |
| 6 | 700/10 | 1000/15 | 2,39 | 21.709 | 18.883 | 4.777.498 |
| 7 | 700/10 | 900/30 | | 20.179 | 17.348 | 3.608.267 |
| | | 1000/5 | 1,98 | | | |
| 8 | 700/10 | 900/15 | | 26.571 | 19.246 | 5.103.210 |
| | | 1000/15 | 2,28 | | | |

### Beispiel 2:

### Kneten von Polystyrol mit Carbonyleisenpulver:

70 g Polystyrol 158K (von BASF SE, Ludwigshafen, Deutschland) wurden in einem Kneter (Modell Messkneter H60 der Fa. IKA Staufen, Deutschland) aufgeschmolzen. Anschließend wurden portionsweise 280 g Carbonyleisenpulver EQ zugegeben. Die Mischung wurde anschließend 30 min geknetet. Nach der Knetung wurde das Produkt ausgetragen und grob granuliert. Die groben Granulate wurden anschließend in einer Mühle auf einen mittleren Durchmesser von etwa 5 mm gemahlen. Die weiteren Schritte erfolgten analog zu Beispiel 1.

### Beispiel 3:

### Kneten von Polystyrol mit Aluminum:

200 g Polystyrol 158K(von BASF, Ludwigshafen, Deutschland) wurden in einem Kneter (Fa. Linden, Marienheide, Deutschland) aufgeschmolzen. Anschließend wurden portionsweise 622 g Aluminiumgrieß ASMEP123 CL (von Fa. ECKA, Fürth, Deutschland) zugegeben und anschließend 30 min geknetet. Nach der Knetung wurde das Produkt ausgetragen und grob granuliert. Die groben Granulate wurden anschließend in einer Mühle auf einen mittleren Durchmesser von etwa 5 mm gemahlen. Die weiteren Schritte erfolgten analog zu Beispiel 1, wobei die Entbinderung und das Sintern in einem Schritt über 5 min bei 600 °C erfolgten.

### Beispiel 4:

### Kneten von Polystyrol mit Kupfer

200 g Polystyrol 158K(von BASF, Ludwigshafen, Deutschland) wurden in einem Kneter (Fa. Linden, Marienheide, Deutschland) aufgeschmolzen. Anschließend wurden portionsweise 910 g Kupfer Rogal GK 0/50 (von Fa. ECKA, Fürth, Deutschland) zugegeben und anschließend 30 min geknetet. Nach der Knetung wurde das Produkt ausgetragen und grob granuliert. Die groben Granulate wurden anschließend in einer Mühle auf einen mittleren Durchmesser von etwa 5 mm gemahlen. Die weiteren Schritte erfolgten analog zu Beispiel 1, wobei die Entbinderung bei 700 °C über 5 min und das Sintern bei 850 °C über 10 min erfolgten.

## Patentansprüche

1. Verfahren zur Herstellung von porösen Metall-Sinterformkörpern, bei dem man expandierbare Polymerteilchen, in denen ein sinterbares Metallpulver dispergiert ist, zu einem Formkörper schäumt und den Formkörper einer Wärmebehandlung unterzieht, bei der das Polymer ausgetrieben wird und das sinterbare Metallpulver zu einem porösen Metall-Sinterformkörper sintert.

2. Verfahren nach Anspruch 1, bei dem man die expandierbaren Polymerteilchen in eine Form einbringt und schäumt.

3. Verfahren nach Anspruch 2, bei dem man die expandierbaren Polymerteilchen vor dem Einbringen in die Form vorschäumt.

4. Verfahren nach einem der vorhergehenden Ansprüche, bei dem der Gewichtsanteil des dispergierten sinterbaren Metallpulvers, bezogen auf das Gesamtgewicht von Polymer und sinterbarem Metallpulver, 60 bis 95 Gew.-% beträgt.

5. Verfahren nach einem der vorhergehenden Ansprüche, bei dem die expandierbaren Polymerteilchen ein physikalisches Treibmittel enthalten.

6. Verfahren nach Anspruch 5, bei dem man die expandierbaren Polymerteilchen erhält, indem man Polymerteilchen, in denen das sinterbare Metallpulver dispergiert ist, mit einem Treibmittel imprägniert.

7. Verfahren nach Anspruch 5 oder 6, bei dem das Treibmittel unter aliphatischen Kohlenwasserstoffen und halogenierten Kohlenwasserstoffen ausgewählt ist.

8. Verfahren nach Anspruch 7, bei dem das Treibmittel Pentan ist.

9. Verfahren nach einem der vorhergehenden Ansprüche, bei dem bei dem das Polymer ein Polymer oder Copolymer von Styrol umfasst.

10. Verfahren nach einem der vorhergehenden Ansprüche, bei dem das sinterbare Metallpulver eine mittlere Partikelgröße von 0,1 bis 80 µm aufweist.

11. Verfahren nach einem der vorhergehenden Ansprüche, bei dem das sinterbare Metallpulver unter Aluminium, Eisen, Kupfer, Nickel und Titan ausgewählt ist.

12. Verfahren nach einem der vorhergehenden Ansprüche, bei dem das sinterbare Metallpulver Carbonyleisenpulver ist.

13. Verfahren nach einem der vorhergehenden Ansprüche, bei dem die expandierbaren Polymerteilchen kugelförmig sind.

14. Verfahren nach einem der vorhergehenden Ansprüche, bei dem die expandierbaren Polymerteilchen einen Durchmesser von 0,5 bis 30 mm aufweisen.

## Claims

1. A process for producing porous sintered shaped metal bodies, wherein expandable polymer particles in which a sinterable metal powder is dispersed are foamed to form a shaped body and the shaped body is subjected to a heat treatment in which the polymer is driven off and the sinterable metal powder sinters to give a porous sintered shaped metal body.

2. The process according to claim 1, wherein the expandable polymer particles are introduced into a mold and foamed.

3. The process according to claim 2, wherein the expandable polymer particles are prefoamed before introduction into the mold.

4. The process according to any of the preceding claims, wherein the proportion by weight of the dispersed sinterable metal powder, based on the total weight of polymer and sinterable metal powder, is from 60 to 95% by weight.

5. The process according to any of the preceding claims, wherein the expandable polymer particles comprise a physical blowing agent.

6. The process according to claim 5, wherein the expandable polymer particles are obtained by impregnating polymer particles in which the sinterable metal powder is dispersed with a blowing agent.

7. The process according to claim 5 or 6, wherein the blowing agent is selected from among aliphatic hydrocarbons and halogenated hydrocarbons.

8. The process according to claim 7, wherein the blowing agent is pentane.

9. The process according to any of the preceding claims, wherein the polymer is a polymer or copolymer of styrene.

10. The process according to any of the preceding claims, wherein the sinterable metal powder has an average particle size of from 0.1 to 80 µm.

11. The process according to any of the preceding claims, wherein the sinterable metal powder is selected from among aluminum, iron, copper, nickel and titanium.

12. The process according to any of the preceding claims, wherein the sinterable metal powder is carbonyl iron powder.

13. The process according to any of the preceding claims, wherein the expandable polymer particles are spherical.

14. The process according to any of the preceding claims, wherein the expandable polymer particles have a diameter of from 0.5 to 30 mm.

## Revendications

1. Procédé de fabrication de corps poreux moulés en fritte métallique, dans lequel des particules polymères expansibles dans lesquelles une poudre métallique frittable est dispersée sont moussées pour obtenir un corps moulé,
le corps moulé subissant un traitement thermique dans lequel le polymère est expulsé et la poudre métallique frittable est frittée en un corps poreux moulé en fritte métallique.

2. Procédé selon la revendication 1, dans lequel les particules polymères expansibles sont placées dans un moule et moussées.

3. Procédé selon la revendication 2, dans lequel les particules polymères expansibles sont pré-moussées avant d'être apportées dans le moule.

4. Procédé selon l'une des revendications précédentes, dans lequel la teneur pondérale de poudre métallique frittable dispersée par rapport au poids total du polymère et de la poudre métallique frittable vaut de 60 à 95 % en poids.

5. Procédé selon l'une des revendications précédentes, dans lequel les particules polymères expansibles contiennent un agent propulseur physique.

6. Procédé selon la revendication 5, dans lequel les particules polymères frittables sont obtenues en imprégnant d'un agent propulseur des particules polymères dans lesquelles la poudre métallique frittable est dispersée.

7. Procédé selon les revendications 5 ou 6, dans lequel l'agent propulseur est sélectionné parmi les hydrocarbures aliphatiques et les hydrocarbures halogénés.

8. Procédé selon la revendication 7, dans lequel l'agent propulseur est le pentane.

9. Procédé selon l'une des revendications précédentes, dans lequel le polymère comprend un polymère ou copolymère de styrène.

10. Procédé selon l'une des revendications précédentes, dans lequel la poudre métallique frittable présente des particules d'une taille moyenne de 0,1 à 80 µm.

11. Procédé selon l'une des revendications précédentes, dans lequel la poudre métallique frittable est sélectionnée parmi l'aluminium, le fer, le cuivre, le nickel et le titane.

12. Procédé selon l'une des revendications précédentes, dans lequel la poudre métallique frittable est une poudre de fer carbonyle.

13. Procédé selon l'une des revendications précédentes, dans lequel les particules polymères expansibles sont de forme sphérique.

14. Procédé selon l'une des revendications précédentes, dans lequel les particules polymères expansibles présentent un diamètre de 0,5 à 30 mm.
